# EUROPÄISCHE PATENTSCHRIFT

(11) **EP 3 168 549 B1**
(45) Veröffentlichungstag und Bekanntmachung des Hinweises auf die Patenterteilung: **12.12.2018**
(21) Anmeldenummer: 16197870.5
(22) Anmeldetag: 09.11.2016
(51) Int. Cl.: F24H 9/20, F24D 12/02, G05D 7/00

(54) **VERFAHREN ZUM BETRIEB EINER HEIZUNGSANLAGE**
METHOD FOR OPERATING A HEATING ASSEMBLY
PROCÉDÉ DE FONCTIONNEMENT D'UNE INSTALLATION DE CHAUFFAGE

(30) Priorität: 16.11.2015 DE 102015119764
(43) Veröffentlichungstag der Anmeldung: 17.05.2017
(73) Patentinhaber: Viessmann Werke GmbH & Co. KG, 35108 Allendorf (DE)
(72) Erfinder: Brügelmann, Martin, 35066 Frankenberg (DE); Heiner, Jan, 35099 Burgwald (DE); Ebel, Erich, 35447 Reiskirchen (DE)
(74) Vertreter: Wolf, Michael

(56) Entgegenhaltungen:
- WO-A1-2009/142377
- DE-A1- 3 923 786
- JP-A- 2002 013 701
- JP-A- 2013 164 177

## Beschreibung

Die Erfindung betrifft ein Verfahren zum Betrieb einer Heizungsanlage gemäß dem Oberbegriff des Patentanspruchs 1.

Ein Verfahren zum Betrieb einer Heizungsanlage der eingangs genannten Art ist aus dem Patentdokument WO 2009/142377 A1 bekannt. Diese Heizungsanlage besteht aus einem Abgas erzeugenden Primärwärmeerzeuger und einem Abgas erzeugenden Sekundärwärmeerzeuger, wobei beide zur Abgasabfuhr mit einer gemeinsamen Abgasabfuhreinrichtung verbunden sind. Nochmals verfahrensmäßig ausgedrückt werden beim Betrieb einer solchen Heizungsanlage ein Primärwärmeerzeuger und erforderlichenfalls ein Sekundärwärmeerzeuger zur Deckung einer Wärmeanforderung betrieben, wobei Abgas der beiden Wärmeerzeuger einer gemeinsamen Abgasabfuhreinrichtung zugeführt wird.
Der Erfindung liegt die Aufgabe zugrunde, ein Verfahren zum Betrieb einer Heizungsanlage der eingangs genannten Art zu verbessern und zwar insbesondere hinsichtlich der Betriebssicherheit einer solchen Anlage bzw. eines solchen Verfahrens. Diese Aufgabe ist mit einem Verfahren zum Betrieb einer Heizungsanlage der eingangs genannten Art durch die im Kennzeichen des Patentanspruchs 1 aufgeführten Merkmale gelöst.

Nach der Erfindung ist also vorgesehen, dass bei nicht in Betrieb befindlichem Sekundärwärmeerzeuger eine Durchsatzmesseinrichtung des Sekundärwärmeerzeugers verwendet wird, um eine Strömung von vom Primärwärmeerzeuger erzeugten Abgas aus der Abgasabfuhreinrichtung in den Sekundärwärmeerzeuger zu detektieren.

Mit anderen Worten zeichnet sich die erfindungsgemäße Lösung somit dadurch aus, dass am Sekundärwärmeerzeuger eine Durchsatzmesseinrichtung vorgesehen ist, mit der bei ausgeschaltetem Sekundärwärmeerzeuger überwacht wird, ob vom Primärwärmeerzeuger kommendes Abgas über die Abgasabfuhreinrichtung in den Sekundärwärmeerzeuger strömt, was selbstverständlich unerwünscht ist, da dies zu einer Ansammlung von Abgas im Aufstellungsraum der Wärmeerzeuger führen könnte. Die Durchsatzmesseinrichtung, mit der eine durchströmende Gasmasse bestimmt wird, dient dabei, was unten noch genauer erläutert wird, einerseits zur Erfassung des eventuell in den Sekundärwärmeerzeuger strömenden Abgases, andererseits kann sie bei laufendem Sekundärwärmeerzeuger aber auch verwendet werden, um den Durchsatz von Brenngas und/oder Luft zu bestimmen, d. h. während des Betriebs des Sekundärwärmeerzeugers kann die Verbrennung statt wie bisher üblich über eine sogenannte Lambda-Regelung (siehe hierzu z. B. https://de.wikipedia.org/w/index.php?title=Lambdaregelung&oldid=146676875) auch auf diesem Wege geregelt werden.
Darüber hinaus kann selbstverständlich auch der Primärwärmeerzeuger mit einer solchen Durchsatzmesseinrichtung versehen und geregelt sein.
Der Vollständigkeit halber wird noch auf die Patentdokumente JP 2013 164177 A, JP 2002 013701 A und DE 39 23 786 A1 hingewiesen.
Das erfindungsgemäße Verfahren zum Betrieb einer Heizungsanlage wird nachfolgend anhand der zeichnerischen Darstellung eines bevorzugten Ausführungsbeispiels näher erläutert.

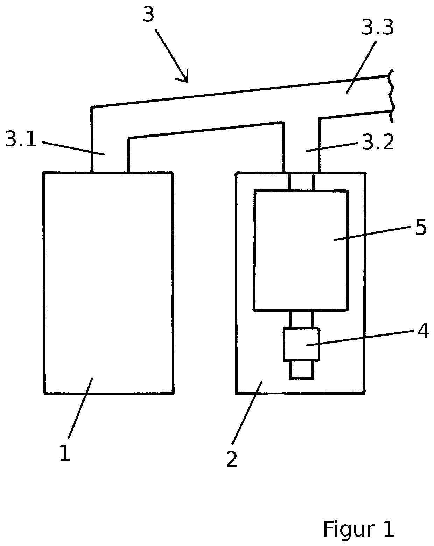

Es zeigt schematisch
- Figur 1: die erfindungsgemäße Heizungsanlage mit einer, in Strömungsrichtung der Luft gesehen, der Brennereinrichtung vorgeschalteten Durchsatzmesseinrichtung.

Die in Figur 1 dargestellte Heizungsanlage besteht in bekannter Weise aus einem Abgas erzeugenden, insbesondere zur Deckung einer Grundlast dienenden Primärwärmeerzeuger 1 (zum Beispiel ein Gasheizkessel, insbesondere ein Brennwertheizgerät) und einem Abgas erzeugenden, insbesondere zur Deckung einer Spitzenlast dienenden Sekundärwärmeerzeuger 2 (zum Beispiel ebenfalls ein Gasheizkessel, insbesondere ein Brennwertheizgerät), wobei beide zur Abgasabfuhr mit einer gemeinsame Abgasabfuhreinrichtung 3 verbunden sind. Bei einer solchen Heizungsanlage, die häufig auch als Kaskade bezeichnet wird, werden also ein Primärwärmeerzeuger 1 und erforderlichenfalls ein Sekundärwärmeerzeuger 2 zur Deckung einer Wärmeanforderung betrieben, wobei Abgas der beiden Wärmeerzeuger 1, 2 einer gemeinsamen Abgasabfuhreinrichtung 3 zugeführt wird.

Die genannte Abgasabfuhreinrichtung 3 besteht dabei im Grunde aus einem ersten Abgasrohr 3.1, das sich an den Primärwärmeerzeuger 1 anschließt, und aus einem zweiten Abgasrohr 3.2, das sich an den Sekundärwärmeerzeuger anschließt, wobei die beiden Abgasrohre 3.1, 3.2 an einer Verbindungsstelle zu einem gemeinsamen Hauptrohr 3.3 zusammengeführt sind, welches schließlich aus einem Gebäude herausgeführt wird. Wie ersichtlich, kann es bei einem solchen, sehr üblichen Aufbau insbesondere bei einem kurzen ersten und/oder zweiten Abgasrohr 3.1, 3.2 dazu kommen, dass zum Beispiel das über das erste Abgasrohr 3.1 strömende Abgas des Primärwärmeerzeugers 1 an der Verbindungsstelle, wo das Hauptrohr 3.3 beginnt, nicht nur in dieses, sondern auch in das zweite Abgasrohr 3.2 des Sekundärwärmeerzeuger strömt, wenn dieser nicht eingeschaltet ist und selbst kein Abgas produziert.

Um in einem solchen Fall rechtzeitig reagieren und damit verhindern zu können, dass Abgas zum Beispiel über den Sekundärwärmeerzeuger in den Aufstellungsraum der Heizungsanlage gelangt, ist nach der erfindungsgemäßen Lösung vorgesehen, dass der Sekundärwärmeerzeuger 2 zur Detektion von gegebenenfalls vom Primärwärmeerzeuger 1 kommenden und über die Abgasabfuhreinrichtung 3 zum Sekundärwärmeerzeuger 2 strömenden Abgas eine Durchsatzmesseinrichtung 4 aufweist. Verfahrensmäßig ausgedrückt, ist somit vorgesehen, dass bei nicht in Betrieb befindlichem Sekundärwärmeerzeuger 2 eine Durchsatzmesseinrichtung 4 verwendet wird, um eine Strömung von vom Primärwärmeerzeuger 1 erzeugten Abgas aus der Abgasabfuhreinrichtung 3 in den Sekundärwärmeerzeuger 2 zu detektieren. Ist also der Sekundärwärmeerzeuger 2 ausgeschaltet und zeigt die Durchsatzmesseinrichtung 4 trotzdem eine Strömung an, so ist dies ein klarer Hinweis darauf, dass unerwünschter Weise Abgas vom Primärwärmeerzeuger 1 zum Sekundärwärmeerzeuger 2 strömt. Auf Basis dieser Information können dann entsprechende Maßnahmen (insbesondere Abschalten des Primärwärmeerzeugers 1 oder auch Schließen eines geeigneten Verschlusses am Abgasrohr 3.2) ergriffen werden, um dieses Problem (jedenfalls kurzfristig) zu lösen.

Bei einer Heizungsanlage, bei der Sekundärwärmeerzeuger 2 eine Luft und Brennstoff unter Wärmeabgabe zu Abgas wandelnde Brennereinrichtung 5 aufweist, ist weiterhin besonders bevorzugt vorgesehen, dass die Durchsatzmesseinrichtung 4 der Brennereinrichtung 5 wahlweise vor- oder nachgeschaltet ist. Figur 1 zeigt dabei die Variante, bei der die Durchsatzmesseinrichtung 4 der genannten Brennereinrichtung 5 vorgeschaltet ist, diese sich also bei Normalbetrieb des Sekundärwärmeerzeugers 2 in Strömungsrichtung der Luft gesehen vor der Brennereinrichtung 5 befindet. Alternativ (aber nicht extra dargestellt) kann die Durchsatzmesseinrichtung 4, wie oben bereits erwähnt, auch nach der Brennereinrichtung 5, also zwischen der Brennereinrichtung 5 und dem zweiten Abgasrohr 3.2 angeordnet sein.

Bei der zuerst genannten Alternative ist dabei schließlich und in Abkehr zu einer bisher bei der Brennereinrichtung 5 zur Festlegung des Gas-Luft-Gemisches verwendeten Lambda-Regelung besonders bevorzugt vorgesehen, dass während des Betriebs des Sekundärwärmeerzeugers 2 dessen Gasdurchsatz mit der Durchsatzmesseinrichtung 4 ermittelt und die Brennereinrichtung bzw. das Verhältnis von zugeführtem Brennstoff zu zugeführter Luft auf Basis des ermittelten Gasdurchsatzes geregelt wird.

### Bezugszeichenliste

- 1: Primärwärmeerzeuger
- 2: Sekundärwärmeerzeuger
- 3: Abgasabfuhreinrichtung
- 3.1: erstes Abgasrohr
- 3.2: zweites Abgasrohr
- 3.3: Hauptrohr
- 4: Durchsatzmesseinrichtung
- 5: Brennereinrichtung

## Patentansprüche

1. Verfahren zum Betrieb einer Heizungsanlage, bei dem ein Primärwärmeerzeuger (1) und erforderlichenchenfalls ein Sekundärwärmeerzeuger (2) zur Deckung einer Wärmeanforderung betrieben werden, wobei Abgas der beiden Wärmeerzeuger (1, 2) einer gemeinsamen Abgasabfuhreinrichtung (3) zugeführt wird,
**dadurch gekennzeichnet,**
**dass** bei nicht in Betrieb befindlichem Sekundärwärmeerzeuger (2) eine Durchsatzmesseinrichtung (4) des Sekundärwärmeerzeugers (2) verwendet wird, um eine Strömung von vom Primärwärmeerzeuger (1) erzeugten Abgas aus der Abgasabfuhreinrichtung (3) in den Sekundärwärmeerzeuger (2) zu detektieren.

2. Verfahren nach Anspruch 1, wobei beim Sekundärwärmeerzeuger (2) zur Wärmeerzeugung eine Brennereinrichtung (5) verwendet wird,
**dadurch gekennzeichnet,**
**dass** während des Betriebs des Sekundärwärmeerzeugers (2) dessen Gasdurchsatz mit der Durchsatzmesseinrichtung (4) ermittelt und die Brennereinrichtung (5) auf Basis des ermittelten Gasdurchsatzes geregelt wird.

## Claims

1. A method for operating a heating assembly in which a primary heat generator (1) and if necessary a secondary heat generator (2) are operated to meet a heat requirement, wherein exhaust gas of the two heat generators (1, 2) is supplied to a common exhaust gas discharge device (3),
**characterized in that**
when the secondary heat generator (2) is not operating, a throughput measuring device (4) of the secondary heat generator (2) is used to detect a flow of exhaust gas generated by the primary heat generator (1) from the exhaust gas discharge device (3) into the secondary heat generator (2).

2. The method according to claim 1,
wherein a burner device (5) is used to generate heat in the secondary heat generator (2),
**characterized in that**
during operation of the secondary heat generator (2), its gas throughput is determined using the throughput measuring device (4) and the burner device (5) is regulated on the basis of the determined gas throughput.

## Revendications

1. Procédé pour l'actionnement d'un dispositif de chauffage, dans lequel un générateur de chaleur primaire (1) et si nécessaire un générateur de chaleur secondaire (2) sont actionnés de manière à couvrir des besoins en chauffage, dans lequel un gaz d'échappement des deux générateurs de chaleur (1, 2) est guidé vers un dispositif d'évacuation de gaz d'échappement commun (3),
**caractérisé en ce que**
un dispositif de mesure de débit (4) du générateur de chaleur secondaire (2) est utilisé lorsque le générateur de chaleur secondaire (2) n'est pas actionné, pour détecter un flux de gaz d'échappement produit par le générateur de chaleur primaire (1), sortant du dispositif d'évacuation de gaz d'échappement (3) vers dans le générateur de chaleur secondaire (2).

2. Procédé selon la revendication 1,
dans lequel un dispositif de combustion (5) est utilisé pour la génération de chaleur au niveau du générateur de chaleur secondaire (2),
**caractérisé en ce que**
pendant le fonctionnement du générateur de chaleur secondaire (2), le débit de gaz de celui-ci est détecté par le dispositif de mesure de débit (4) et le dispositif de combustion (5) est réglé sur la base du débit de gaz détecté.
